Europäisches Patentamt

(19) European Patent Office

Office européen des brevets

(11) EP 0 578 363 B1

(12) **EUROPEAN PATENT SPECIFICATION**

(45) Date of publication and mention
of the grant of the patent:
**03.01.1996 Bulletin 1996/01**

(51) Int. Cl.⁶: $B01D\ 53/34$

(21) Application number: **93304253.3**

(22) Date of filing: **01.06.1993**

(54) **Method for operating dry-process, desulfurization apparatus**

Verfahren zum Betrieb einer Trocken-Entschwefelungs-Vorrichtung

Procédé d'opération d'un dispositif de désulfuration par voie sèche

(84) Designated Contracting States:
**AT DE FR GB NL SE**

(30) Priority: **06.07.1992 JP 200132/92**

(43) Date of publication of application:
**12.01.1994 Bulletin 1994/02**

(73) Proprietor: **SUMITOMO HEAVY INDUSTRIES, LTD**
**Tokyo 100 (JP)**

(72) Inventor: **Yamamoto, Kazuhiko**
**Yokohama-Shi Kanagawa-Ken (JP)**

(74) Representative: **Smith, Norman Ian et al**
**London WC2A 1JQ (GB)**

(56) References cited:
**EP-A- 0 202 411**           **DE-A- 2 943 698**
**DE-B- 1 261 266**          **US-A- 3 686 832**

## Description

## BACKGROUND OF THE INVENTION

### 1) FIELD OF THE INVENTION

The present invention relates to a method for operating a dry-process, desulfurization apparatus.

### 2) PRIOR ART

It is known that the desulfurization capacity of a dry-process desulfurization apparatus using a carbonaceous adsorbent can be increased generally when a flue gas to be desulfurized has a lower temperature. Thus, to make the apparatus smaller in the size, it is necessary to lower a flue gas temperature to a minimum.

For example, a dry desulfurisation process using relatively low adsorption temperatures is known from DE-A-2943698.

On the other hand, when a flue gas has a higher $O_2$ concentration, for example, at least 10% by volume, and when the $SO_2$ concentration is higher, the temperature of the adsorbent will be increased due to the heat of adsorption reaction evolved when the flue gas is adsorbed onto the adsorbent. It is known that the temperature increased rate is much higher than at a lower $O_2$ concentration (e.g. less than 10% by volume).

## SUMMARY OF THE INVENTION

An object of the present invention is to provide a method for economically operating a dry-process, desulfurization apparatus using a carbonaceous adsorbent with safety.

According to the present invention, a dry-process, moving bed desulfurization apparatus using a carbonaceous adsorbent is operated to desulfurize a flue gas containing $SO_x$, typically $SO_2$, at least 10% by volume of $O_2$ and at least one of $NH_3$, $HC\ell$, $Na_2O$, $KC\ell$, $K_2O$, etc. capable of reacting with $SO_x$, such as $SO_2$, $SO_3$, $H_2SO_3$, $H_2SO_4$, etc. to form solid compounds at a temperature of not more than 130°C within a range confined by the following two equations:

$$Y = \frac{50}{3}T - \frac{4,000}{3}, \text{ and}$$

$$Y = -20T + 2,800$$

wherein Y is a $SO_2$ or $SO_x$ concentration, ppm, on dry basis and T is a flue gas temperature, °C.

## BRIEF DESCRIPTION OF THE DRAWINGS

Fig. 1 is a $SO_x$ adsorption profile on a carbonaceous adsorbent in a carbonaceous adsorbent moving bed for a flue gas containing $SO_x$ and passing in a cross-flow to the moving bed at higher and lower flue gas temperatures.

Fig. 2 is a diagram showing relations between an amount of adsorbed $SO_2$ per unit weight of a carbonaceous adsorbent at a flue gas upstream side and a temperature of flue gases containing $SO_2$ at various concentrations.

Fig. 3 is a diagram showing relations between percent pulverization of carbonaceous adsorbent and a temperature of flue gases containing $SO_2$ at various concentrations.

Fig. 4 is a diagram showing relations between an increase in temperature of adsorbent bed and a temperature of flue gases containing $SO_2$ at various concentration.

Fig. 5 is a diagram showing an applicable range of the present invention in relations between a $SO_2$ concentration of flue gas and a flue gas temperature.

## DETAILED DESCRIPTION OF THE INVENTION

In the present invention, a flue gas having the following conditions is used:
The flue gas contains:

(a) $SO_2$,
(b) at least 10% by volume of $O_2$, and
(c) at least one of substances capable of reacting with $SO_x$ including $SO_2$, $SO_3$, $H_2SO_3$ and $H_2SO_4$ contained in the flue gas, for example, at least one of $NH_3$, $HC\ell$, $NaC\ell$, $N_2O$, $KC\ell$, and $K_2O$, where $NH_3$ may be intentionally added to the flue gas in some cases.

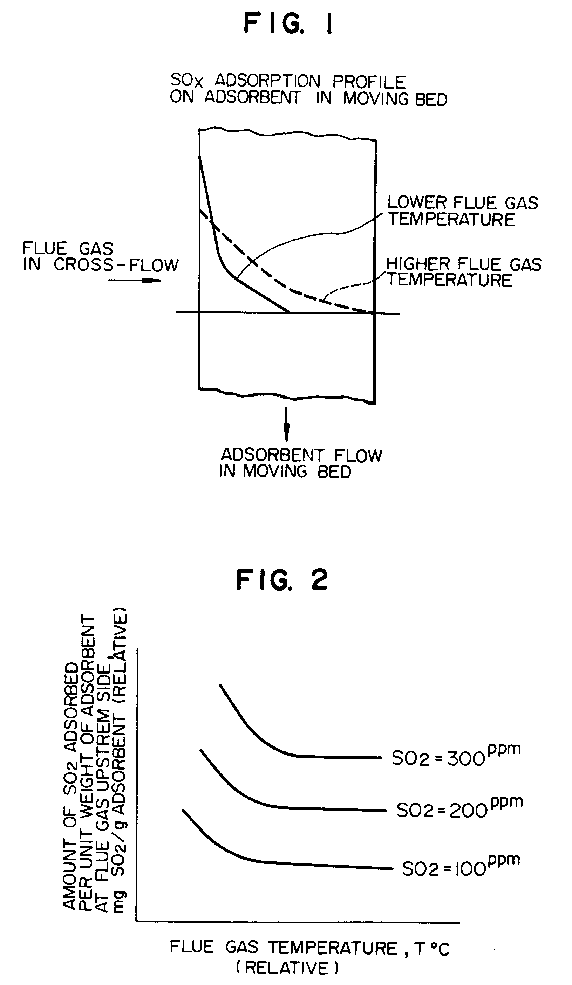

As is well known, adsorption rate of $SO_2$ or other $SO_x$ components onto a carbonaceous adsorbent such as activated carbon or char is increased at a lower flue gas temperature. That is, $SO_2$ and other $SO_x$ components are adsorbed on a carbonaceous adsorbent in a very thin zone at the flue gas upstream side, and an amount of adsorbed $SO_2$ or other $SO_x$ components for unit weight of the adsorbent is drastically increased, as shown in Fig. 1 by a full line showing a higher flue gas temperature, as compared with a dotted line showing a lower flue gas temperature.

The phenomenon that the amount of adsorbed $SO_2$ or other $SO_x$ component is drastically increased in a very thin zone at the flue gas upstream side has been clarified by tests conducted by the present inventor. That is, in case of $SO_2$ as a typical $SO_x$ component in a flue gas, an amount of $SO_2$ adsorbed on unit weight of activated carbon or char as a typical carbonaceous adsorbent in the very thin zone at the flue gas upstream side, e.g. mg $SO_2$/g activated carbon or char, changes at temperatures of flue gases containing $SO_2$ at various concentrations, 300 ppm, 200 ppm and 100 ppm, as shown in Fig. 2. At any of $SO_2$ concentrations of 300 ppm, 200 ppm and 100 ppm, the amount of adsorbed $SO_2$ per unit weight of activated carbon or char drastically increases at a lower flue gas temperature.

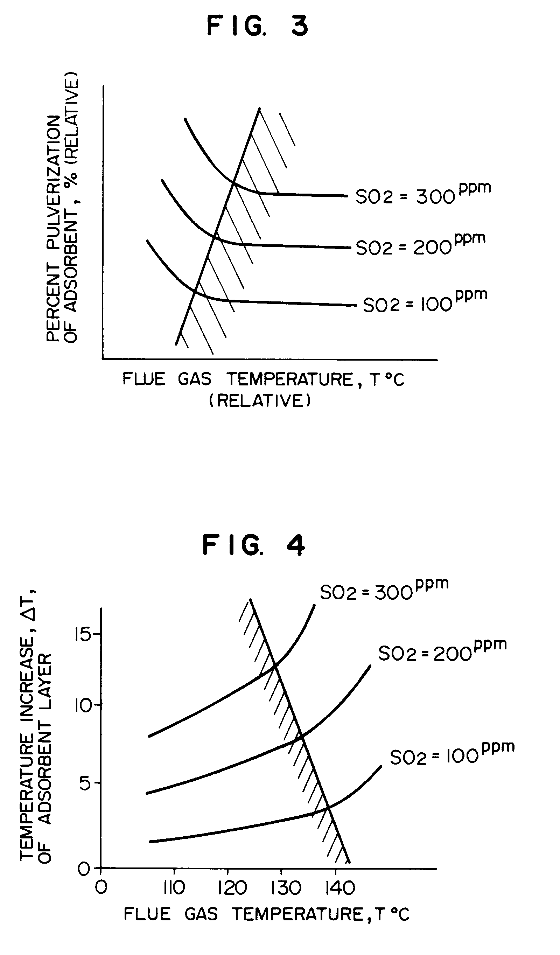

When the amount of adsorbed $SO_2$ or other $SO_x$ component on per unit weight of activated carbon or char is extremely increased, pores in the activated carbon or char as a carbonaceous adsorbent are broken by volume expansion, i.e. increase in volume, of solid compounds, such as $NH_4HSO_4$, $(NH_4)_2SO_4$, $Na_2SO_4$, $K_2SO_4$ and or $NH_4C\ell$ formed in the pores, and the active carbon or char is pulverized, leading to an extreme decrease in the amount of the usable activated carbon, as shown in Fig. 3, where the hatched region is effectively the available zone from the viewpoint of smaller percentage pulverization of activated carbon or char.

As a result of further tests made by the present inventor to solve the problem of extreme decrease in the amount of the usable activated carbon or char, it has been found that the extreme decrease in the amount of activated carbon or char as a carbonaceous adsorbent can be prevented by keeping the $SO_2$ concentration of a flue gas and a flue gas temperature into a region below the line expressed by the following equation:

$$Y = \frac{50}{3}T - \frac{4,000}{3}$$

where Y is a $SO_2$ or $SO_x$ concentration, ppm, on dry basis, and T is a flue gas temperature, °C.

It has been found by further tests that when the $SO_2$ concentration of a flue gas containing at least 10% by volume of oxygen is higher, the temperature of activated carbon or char as a carbonaceous adsorbent tends to be higher, for example, by about 10°C at 300 ppm $SO_2$, due to an increase of heat of adsorption reaction than at a lower oxygen concentration, for example, less than 10% by volume of $O_2$ in a flue gas, giving rise to an appreciable difference in a temperature increase in the adsorbent bed, $\Delta T$, between an oxygen concentration of at least 10% by volume and that of less than 10% by volume at a specific $SO_2$ concentration over a specific temperature level, as shown in Fig. 4. In other words, within the hatched region, there is no appreciable difference in the increase of activated carbon or char temperature, $\Delta T$, between an $O_2$ concentration of at least 10% by volume and that of less than 10% by volume.

When the activated carbon or char temperature is increased at a high $O_2$ concentration of a flue gas, a spontaneous oxidation rate of activated carbon or char as a carbonaceous adsorbent is increased, and there is a fear of hot spot formation in the adsorbent, leading to a danger of ignition.

As a result of further tests, it has been found that the adsorbent can be prevented from the formation of hot spots by keeping the $SO_2$ concentration of a flue gas and temperatures of a flue gases containing oxygen at an oxygen concentration of at least 10% by volume within a region below the line defined by the following equation:

$$Y = -20T + 2,800$$

where Y and T are the same as defined above.

On the basis of the foregoing test results, extreme consumption of an adsorbent and formation of hot spots can be prevented by operating a dry-process, moving bed desulfurization apparatus using a carbonaceous adsorbent, such as activated carbon or char, for desulfurizing a flue gas containing $SO_x$ and oxygen at an oxygen concentration of at least 10% by volume within a region confined by the following equations:

$$Y = \frac{50}{3}T - \frac{4,000}{3}, \text{ and}$$

$$Y = -20T + 2,800$$

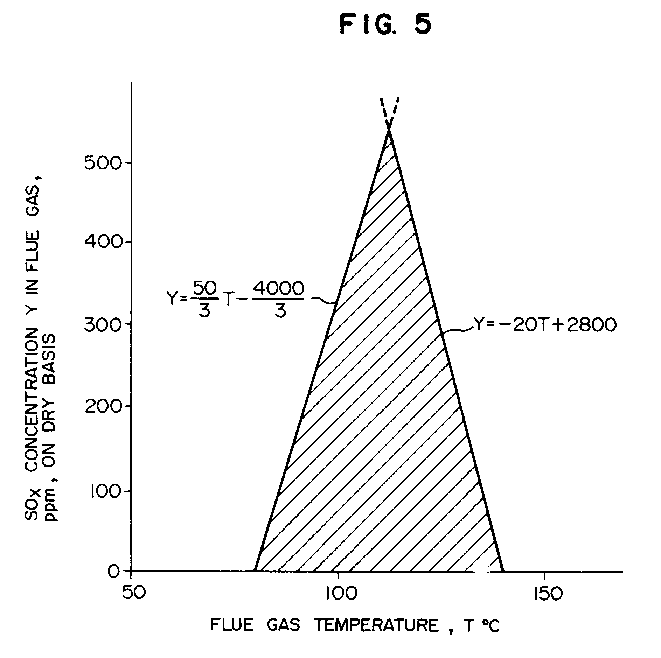

where Y is a $SO_2$ concentration, ppm, on dry basis and T is a flue gas temperature, °C, in other words, the hatched region in Fig. 5.

The present invention includes operation of a dry-process, desulfurizing apparatus using a carbonaceous adsorbent in the hatched region of Fig. 5, and also controlling the flue gas temperature to the temperature range in the hatched region of Fig. 5. For the latter purpose, a flue gas cooling unit can be provided before the dry process, desulfurization apparatus or operating conditions for a flue gas source can be adjusted.

In the present invention, a sintering waste gas, incineration flue gas, an electric furnace waste gas, etc. can be used as a flue gas.

According to the present invention, consumption of adsorbent and occurrence of hot spots due to an increase in the adsorbent temperature can be prevented and safe and economical operation can be attained by operating a dry-process, moving bed desulfurization apparatus using a carbonaceous adsorbent for desulfurizing a flue gas containing $SO_x$, at least 10% by volume of $O_2$, and at least one of substances such as $NH_3$, $HC\ell$, $NaC\ell$, $Na_2O$, $KC\ell$, $K_2O$, etc., capable of reacting with $SO_x$ such as $SO_2$, $SO_3$, $H_2SO_3$, $H_2SO_4$, etc. to form solid compounds at a temperature of not more than 130°C within a region confined by the following equations:

$$Y = \frac{50}{3}T - \frac{4,000}{3}, \text{ and}$$

$$Y = -20T + 2,800$$

**Claims**

1. A method for operating a dry-process, moving bed desulfurization apparatus using a carbonaceous adsorbent, which comprises using a dry-process, desulfurization apparatus using a carbonaceous adsorbent for a flue gas containing $SO_x$ and at least 10% by volume of $O_2$ and at least one of substances capable of reacting with $SO_x$ to form solid compounds at a temperature of not more than 130°C within a region confined by the following two equations:

$$Y = \frac{50}{3}T - \frac{4,000}{3}, \text{ and}$$

$$Y = -20T + 2{,}800$$

wherein Y is a SO$_x$ concentration, ppm, on dry basis and T is a flue gas temperature, °C.

2. A method according to Claim 1, wherein the substances capable of reacting with SO$_x$ to form solid compounds at a temperature of not more than 130°C are NH$_3$, HC$\ell$, NaC$\ell$, Na$_2$O, KC$\ell$ and K$_2$O.

3. A method according to Claim 1, wherein the SO$_x$ is SO$_2$ and at least one of SO$_3$, H$_2$SO$_3$ and H$_2$SO$_4$.

4. A method according to Claim 1, wherein the flue gas temperature is controlled to within the region confined by the two equations.

## Patentansprüche

1. Verfahren zum Betreiben einer mit Hilfe eines kohlenstoffartigen Adsorptionsmittels trocken arbeitenden Bewegtbett-Entschwefelungsvorrichtung, umfassend die Benutzung einer trocken arbeitenden Entschwefelungsvorrichtung mit einem kohlenstoffartigen Adsorptionsmittel für ein Abgas mit SO$_x$ und mindestens 10 Vol.-% O$_2$ sowie mindestens einer zur Reaktion mit SO$_x$ unter Bildung fester Verbindungen bei einer Temperatur von nicht mehr als 130°C fähigen Substanz innerhalb eines durch die folgenden beiden Gleichungen:

$$Y = \frac{50}{3} T - \frac{4000}{3} \text{ und}$$

$$Y = -20T + 2800$$

worin bedeuten:
    Y die SO$_x$-Konzentration in ppm (auf Trockenbasis) und
    T die Abgastemperatur in °C umschriebenen Bereichs.

2. Verfahren nach Anspruch 1, wobei es sich bei den Substanzen mit der Fähigkeit zur Reaktion mit SO$_x$ unter Bildung fester Verbindungen bei einer Temperatur von nicht mehr als 130°C um NH$_3$, HCl, NaCl, Na$_2$O, KCl und K$_2$O handelt.

3. Verfahren nach Anspruch 1, wobei SO$_x$ für SO$_2$ und mindestens eine der Verbindungen SO$_3$, H$_2$SO$_3$ und H$_2$SO$_4$ steht.

4. Verfahren nach Anspruch 1, wobei die Abgastemperatur innerhalb des durch die beiden Gleichungen umschriebenen Bereichs gesteuert wird.

## Revendications

1. Procédé de mise en oeuvre d'un appareil de désulfurisation à lit mobile par un procédé par voie sèche utilisant un adsorbant de type carboné, qui comprend l'utilisation d'un appareil de désulfurisation fonctionnant via un procédé par voie sèche pour la désulfurisation d'un gaz de combustion contenant SO$_x$ et au moins 10% en volume de O$_2$ et au moins une des substances capable de réagir avec SO$_x$ de façon à former des composés à l'état solide à une température d'au plus 130°C dans une région délimitée par les deux équations suivantes:

$$Y = \frac{50}{3} T - \frac{4{,}000}{3}, \text{ et}$$

$$Y = -20T + 2{,}800$$

dans lesquelles Y est une concentration en SO$_x$, en ppm, calculée en matière sèche et T est une température de gaz de combustion, en °C.

2. Procédé selon la revendication 1 dans lequel les substances capables de réagir avec SO$_x$ de façon à former des composés à l'état solide à une température d'au plus 130°C sont NH$_3$, HCl, NaCl, Na$_2$O, KCl et K$_2$O.

3. Procédé selon la revendication 1, dans lequel SO$_x$ est SO$_2$ et au moins une substance parmi SO$_3$, H$_2$SO$_3$ et H$_2$SO$_4$.

4. Procédé selon la revendication 1 dans lequel la température du gaz de combustion est contrôlée de façon à demeurer dans la région délimitée par les deux équations.

# FIG. 1

SO$_x$ ADSORPTION PROFILE
ON ADSORBENT IN MOVING BED

FLUE GAS
IN CROSS-FLOW

LOWER FLUE GAS
TEMPERATURE

HIGHER FLUE GAS
TEMPERATURE

ADSORBENT FLOW
IN MOVING BED

# FIG. 2

AMOUNT OF SO$_2$ ADSORBED
PER UNIT WEIGHT OF ADSORBENT
AT FLUE GAS UPSTREM SIDE
mg SO$_2$/g ADSORBENT (RELATIVE)

SO$_2$ = 300 ppm

SO$_2$ = 200 ppm

SO$_2$ = 100 ppm

FLUE GAS TEMPERATURE , T °C
(RELATIVE)

5

# FIG. 3

PERCENT PULVERIZATION OF ADSORBENT, % (RELATIVE)

SO2 = 300 ppm

SO2 = 200 ppm

SO2 = 100 ppm

FLUE GAS TEMPERATURE, T °C
(RELATIVE)

# FIG. 4

SO2 = 300 ppm

SO2 = 200 ppm

SO2 = 100 ppm

TEMPERATURE INCREASE, ΔT, OF ADSORBENT LAYER

15

10

5

0

0   110   120   130   140

FLUE GAS TEMPERATURE, T °C

# FIG. 5

$Y = \dfrac{50}{3}T - \dfrac{4000}{3}$

$Y = -20T + 2800$

SOx CONCENTRATION Y IN FLUE GAS, ppm, ON DRY BASIS

FLUE GAS TEMPERATURE, T °C